**Europäisches Patentamt**

**European Patent Office**

**Office européen des brevets**

(11) Veröffentlichungsnummer: **0 075 339**
**A1**

## (12) EUROPÄISCHE PATENTANMELDUNG

(21) Anmeldenummer: **82201019.5**

(22) Anmeldetag: **13.08.82**

(51) Int. Cl.³: **B 62 D 1/18**

(30) Priorität: **18.09.81 DE 3137107**

(43) Veröffentlichungstag der Anmeldung: **30.03.83**
**Patentblatt 83/13**

(84) Benannte Vertragsstaaten: **BE DE FR GB IT NL SE**

(71) Anmelder: **KARL SCHMIDT GMBH,**
**Christian-Schmidt-Strasse 8/12 Postfach 1351,**
**D-7107 Neckarsulm (DE)**

(72) Erfinder: **Grothe, Klaus, Ing.grad., Aschaffenburger**
**Strasse 127, D-8750 Aschaffenburg 8 (DE)**
Erfinder: **Bauer, Wolfgang, Ing.grad., Welzheimer**
**Strasse 5, D-8757 Karlstein 1 (DE)**
Erfinder: **Kreuzer, Martin, Ing.grad., Wendelinusweg 2,**
**D-8751 Kleinwallstadt (DE)**
Erfinder: **Hartmann, Peter, Sonnenstrasse 52,**
**D-8752 Waldaschaff (DE)**

(74) Vertreter: **Fischer, Ernst, Dr., Reuterweg 14,**
**D-6000 Frankfurt am Main 1 (DE)**

(54) **Lenkeinrichtung für Kraftfahrzeuge.**

(57) Bei einer Lenkeinrichtung für Kraftfahrzeuge mit geteilter Lenkwelle ist der lenkgetriebeseitige Lenkwellenteil (1) axial verschiebbar und der lenkradseitige Lenkwellenteil (5) winkelbewegbar.

Um die Verstellbarkeit der Lenkwellenteile (1, 5) so einfach wie möglich zu gestalten, ist vorgesehen, dass der lenkgetriebeseitige Lenkwellenteil (1) als Teleskopwelle (2) ausgebildet ist, die über ein Kreuzgelenk (4) mit dem lenkradseitigen Lenkwellenteil (5) verbunden ist, wobei das den lenkgetriebeseitigen Lenkwellenteil (1) umgebende Gehäuse (10) einen die Teleskopwelle (2) einschliessenden Rohrabschnitt (7), der mit dem den lenkradseitigen Lenkwellenteil (5) umgebenden winkelbewegbaren Gehäuse (13) über eine arretierbare Schwenkachse gekoppelt ist, umgibt und mit diesem verspannbar ist.

KARL SCHMIDT GMBH     —1—     17. September 1981

Christian-Schmidt-Str. 8 - 12     DKQ/GFRO - 0108

7107 Neckarsulm

Prov. Nr. 8766 KSL

## Lenkeinrichtung für Kraftfahrzeuge

Die Erfindung betrifft eine Lenkeinrichtung für Kraftfahrzeuge, bestehend aus einem lenkgetriebeseitigen, eine Axialverschiebung zulassenden und einem lenkradseitigen, eine Winkelbewegung zulassenden Lenkwellenteil, die über ein Kreuzgelenk miteinander verbunden sind.

Aus Gründen der Sicherheit und des Komforts ist es bekannt, die Lenksäule bzw. Lenkwelle axial verschieblich und winkelbewegbar zu gestalten. So ist in dem DE- GM 78 22 555 eine geteilte Lenkwelle beschrieben, die zusammen mit einer Lagerhülse in ihrer Länge und zusammen mit einem diese Lagerhülse umhüllenden und in Drehrichtung sperrenden Lagerkörper in ihrer Neigung, bezogen auf die Fahrzeuglängsachse, verstellbar ist. In der DE-AS 19 49 241 ist eine Lenkeinrichtung für Kraftfahrzeuge vorgesehen, die eine durch ein Lenkrad drehbare Lenkwelle aufweist, die in einer Lenksäule geführt und gelagert ist und bei der die Lenkwelle außerdem zur Verschwenkung innerhalb einer Kulisse ein Kreuzgelenk aufweist. Die Lenkwelle besteht aus einem, dem Lenkgetriebe zugewandten, festen und dem Lenkrad zugewandten, um seine Längsmittelachse drehbaren Teil, an dem die Kulisse befestigt ist. Ferner ist der mit dem Lenkrad verbundene Teil der Lenkwelle teleskopartig
nach oben ausziehbar gestaltet.

Der Nachteil dieser Lenkeinrichtungen besteht im wesentlichen
darin, daß die Verstellbarkeit von Länge und Winkel der Lenkwelle nur mit einem relativ hohen Aufwand möglich ist, insbesondere, weil die die Axialverschiebung und Winkelbewegung zulassenden Mittel getrennt voneinander angeordnet sind. Ferner
ist bei der Lenkeinrichtung nach der DE- AS 19 49 241 nur ein
stufenweises Verstellen von Länge und Winkel der Lenkwelle
möglich.

Aufgabe der vorliegenden Erfindung ist es, die eingangs beschriebene Lenkeinrichtung so zu gestalten, daß die Axialverschiebung des lenkgetriebeseitigen Lenkwellenteils sowie die
Winkelbewegung des lenkradseitigen Lenkwellenteils direkt über
die Lenkwelle durchführbar und die dazu erforderliche Zahl der
Handgriffe so klein und so einfach wie möglich ist, ohne
allerdings die Funktion der Lenkeinrichtung in irgendeiner
Weise zu beeinträchtigen.

Die Lösung dieser Aufgabe erfolgt durch eine lenkgetriebeseitig angebrachte, zum Lenkrad hin ausziehbare Teleskopwelle,
einen den Schiebeteil der Teleskopwelle konzentrisch umgebender, mit diesem axial verschieblich verbundener und in
einem konzentrisch angeordneten ortsfesten Gehäuse längsverschieblich gelagerter Rohrabschnitt, der mit dem Gehäuse durch
Reibschluß verspannbar ist und an dessen lenkradseitigem Rand
sich Verbindungselemente befinden, die über eine senkrecht auf
ihnen stehende, koaxial zu einer der Drehachsen des
Kreuzgelenks verlaufende Schwenkachse mit dem den lenkradseitigen Lenkwellenteil umgebenden und mit diesem winkelbewegbar verbundenen Gehäuse gekoppelt sind. Durch diese Maßnahmen ist es möglich, die Axialverschiebung des lenkradseitigen Lenkwellenteils unabhängig von dessen Winkelbewegung
durchführen zu können.

Die Verbindungselemente sind vorzugsweise durch zwei einander gegenüberliegende Laschen gebildet.

Die Winkelbewegung des lenkradseitigen Lenkwellenteils ist dadurch begrenzt, daß sich in wenigstens einer der als Laschen ausgebildeten Verbindungselemente des Rohrabschnitts ein kreisbogenförmiges quer zur Achsrichtung sich erstreckendes Langloch befindet, in das ein in dem lenkradseitigen Lenkwellenteil umgebenden Gehäuse eingesetzter Sperrbolzen hineinragt.

Der lenkradseitige Lenkwellenteil ist entsprechend der Größe des Winkels des Langlochs in einer Ebene beidseitig der Mittelachse zweckmäßigerweise jeweils um 3 bis 10$^{\circ}$ bewegbar.

Eine vorzugsweise Ausgestaltung der erfindungsgemäßen Lenkeinrichtung besteht darin, daß zur Herstellung einer Reibschlußverbindung zwischen dem Rohrabschnitt und dem diesen umgebenden Gehäuse an dem lenkradseitigen Endbereich, das in diesem Bereich einen Längsschlitz aufweist, eine Klemmsitzausführung mit geschlitzter Nabe angeordnet ist. In einem zweiten in der Nabe befindlichen Klemmschlitz ist in einer entsprechend gestalteten Bohrung eine an dem den lenkradseitigen Lenkwellenteil umgebenden Gehäuse angelenkte Stange klemmbar geführt.

Um sicherzustellen, daß die in dem zweiten Klemmschlitz geführte Stange bei Reibschluß nicht verrutschen kann, ist diese mit einer Verzahnung versehen, in die ein im Klemmschlitz auf der Klemmschraube lose angeordneter klemmbarer Zahnring eingreift. Durch eine solche Anordnung kann der Kraftfahrzeugführer die Reibschlußverbindung sowohl für die Axialverschiebung des lenkgetriebeseitigen Lenkwellenteils als auch für die Winkelbewegung des lenkradseitigen Lenkwellenteils mit einer Hand herstellen bzw. lösen, während er mit der anderen Hand die Axialverschiebung und/oder Winkelbewegung der entsprechenden Lenkwellenteile vornehmen kann.

Eine Abwandlung der Lenkeinrichtung besteht darin, daß die am oberen Endbereich des Gehäuses für den lenkgetriebeseitigen Lenkwellenteil angebrachte einen Klemmschlitz aufweisende Klemmsitzausführung nur zur Herstellung der Reibschlußverbindung zwischen lenkgetriebeseitigem Gehäuse und Rohrabschnitt, während die Reibschlußverbindung zwischen der bzw. den Laschen des Rohrabschnitts und dem den lenkradseitigen Lenkwellenteil umgebenden Gehäuse mittels des als Klemmbolzen ausgebildeten Sperrbolzens erfolgt.

Zweckmäßigerweise besteht zwischen dem lenkradseitigen Rand des Rohrabschnitts und dem Gehäuse für den lenkradseitigen Lenkwellenteil eine elastische Verkleidung.

Die Erfindung ist in den Zeichnungen beispielhaft dargestellt und wird nachfolgend näher erläutert. Es zeigen:

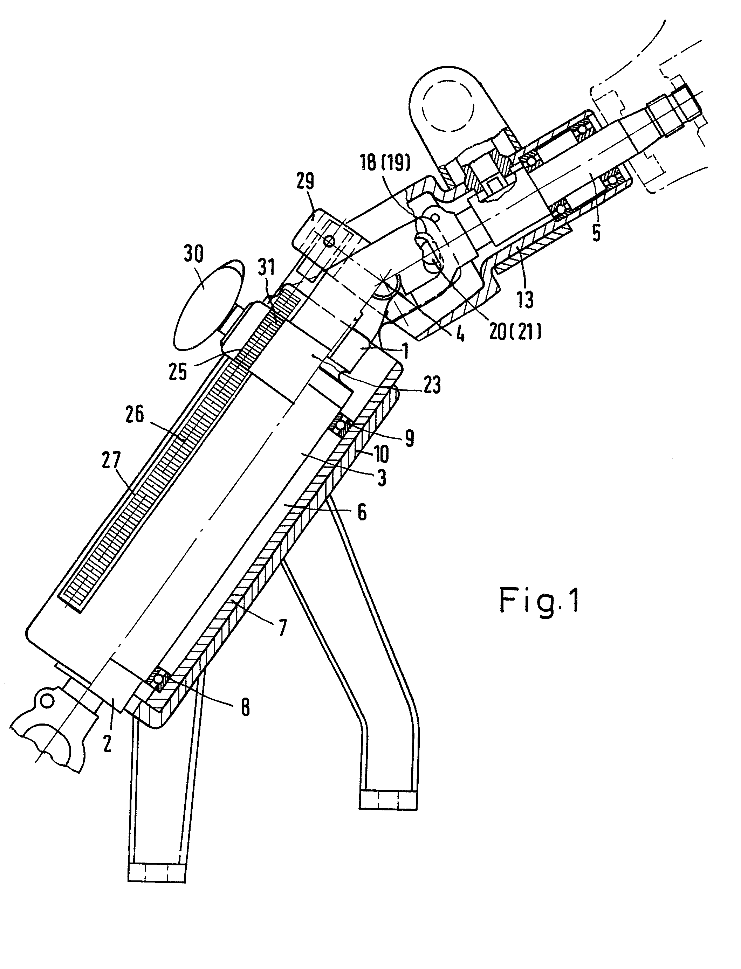

Fig. 1:    eine Seitenansicht der Lenkeinrichtung mit einem Teillängsschnitt

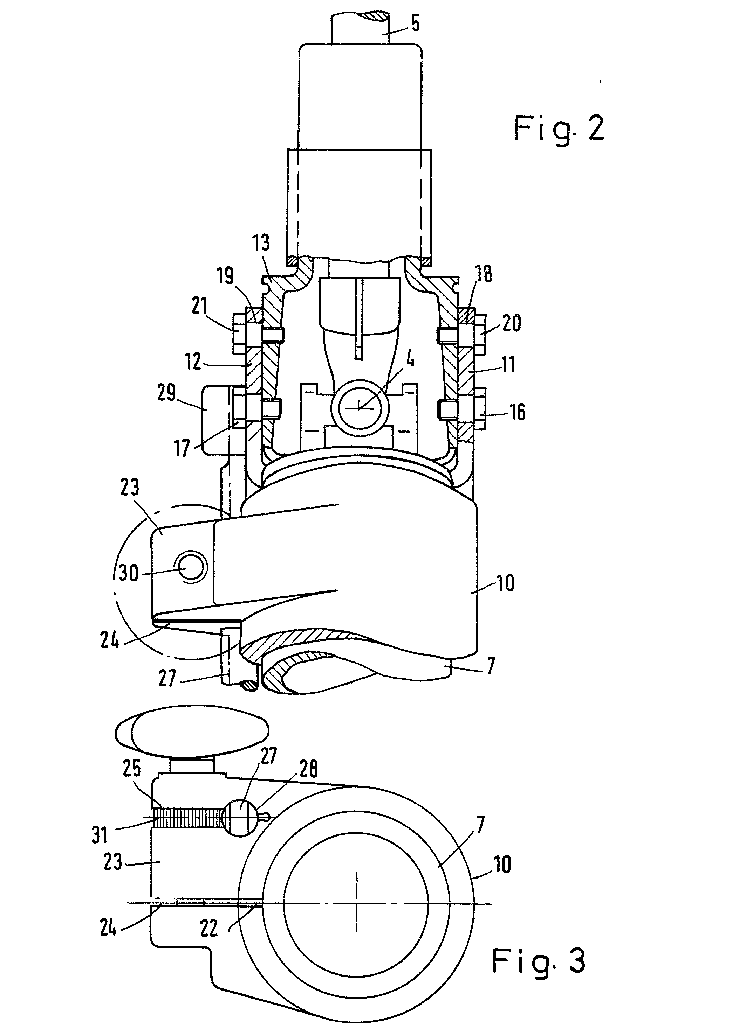

Fig. 2:    eine Teilseitenansicht der Lenkeinrichtung mit einem Teillängsschnitt im Bereich der Verbindung von lenkgetriebeseitigem und lenkradseitigem Lenkwellenteil

Fig. 3:    einen Querschnitt durch die Lenkeinrichtung kurz oberhalb der Klemmsitzausführung

Der lenkgetriebeseitige Lenkwellenteil 1 besteht aus der Teleskopwelle 2, deren Schiebeteil 3 über das Kreuzgelenk 4 mit dem lenkradseitigen Lenkwellenteil 5 fest verbunden ist. Der Schiebeteil 3 ist unter Bildung eines Ringraumes 6 konzentrisch von dem Rohrabschnitt 7 umgeben, der mit dem Schiebeteil 3 in der Weise verbunden ist, daß dieser zusammen mit dem Schiebeteil 3 achsverschieblich ist. Da das Schiebeteil 3 ein Dehmoment überträgt, sind in dem Ringraum 6 zwischen Schiebeteil 3 und Rohrabschnitt 7 Lager 8, 9 angeordnet. Der Rohrabschnitt 7 ist auf der Innenwand des ortsfest koaxial angeordneten Gehäuses 10 axial verschieblich gelagert. Die beiden, am lenkradseitigen Rand des Rohrabschnitts 7 befindlichen, einander gegenüberliegenden Laschen 11, 12 sind mit dem den lenkradseitigen Lenkwellenteil 5 konzentrisch umgebenden Gehäuse 13 über mit einer der Drehachsen 14, 15 des Kreuzgelenks 4 koaxial verlaufenden Schwenkachsen 16, 17 verbunden. Die Laschen 11, 12 weisen jeweils ein kreisbogenförmiges, sich beidseitig der Mittelachse des Lenkwellenteils 5 jeweils über einen Bereich von 5° erstreckendes Langloch 18, 19 auf, in das jeweils einer in das Gehäuse 13 eingesetzter Sperrbolzen 20, 21 hineinragt. Die Reibschlußverbindung zwischen dem Rohrabschnitt 7 und dem diesen umgebenden Gehäuse 10 erfolgt durch eine am lenkradseitigen Ende des in diesen Bereich einen Längsschlitz 22 aufweisenden Gehäuses 10 angebrachten Klemmsitzausführung 23 mit zwei Klemmschlitzen 24, 25, wobei in dem einen Klemmschlitz 25 eine mit der Verzahnung 26 versehene Stange 27 in einer Bohrung 28 geführt und an einer am Gehäuse 10 für den lenkradseitigen Lenkwellenteil 5 befestigten Halterung 29 angelenkt ist. In die Verzahnung 26 der Stange 27 greift ein lose auf der Klemmschraube 30 liegender klemmbarer Zahnring 31 ein.

Die mit der Erfindung erzielten Vorteile bestehen darin, daß zur Durchführung der Axialverschiebung des lenkgetriebeseitigen Lenkwellenteils und/oder der Winkelbewegung des lenkradseitigen Lenkwellenteils und damit zur Einstellung der gewünschten Position des Lenkrades nur die durch die Klemmsitzausführung mit zwei Klemmschlitzen aufweisender Nabe erzeugte Reibschlußverbindung gelöst, dann das Lenkrad durch einen weiteren Handgriff in die richtige Stellung gebracht und danach die Reibschlußverbindung wieder hergestellt wird. Die notwendigen Handgriffe sind in einfacher und schneller Weise durchführbar.

0075339

P A T E N T A N S P R U C H E

1. Lenkeinrichtung für Kraftfahrzeuge, bestehend aus einem lenkradseitigen, eine Axialverschiebung zulassenden und einem lenkgetriebeseitigen, eine Winkelbewegung zulassenden Lenkwellenteil (1, 5), die über ein Kreuzgelenk (4) miteinander verbunden sind, gekennzeichnet durch eine lenkgetriebeseitig angeordnete Teleskopwelle (2), ein mit dem Schiebeteil (3) der Teleskopwelle axial verschieblich verbundener und diesen konzentrisch umgebender Rohrabschnitt (7) und ein ortsfest angeordnetes Gehäuse (10), in dem der Rohrabschnitt längsverschieblich gelagert ist, wobei Rohrabschnitt und Gehäuse durch eine Reibschlußverbindung miteinander verspannbar und am lenkradseitigen Rand des Rohrabschnitts Verbindungselemente (11, 12) vorgesehen sind, die über eine koaxial zu einer der Drehachsen (14, 15) des Kreuzgelenks (4) verlaufende Schwenkachse (16, 17) mit dem den lenkradseitigen Lenkwellenteil umgebenden Gehäuse (13) gekoppelt sind.

2. Lenkeinrichtung nach Anspruch 1, dadurch gekennzeichnet, daß die Verbindungselemente aus zwei einander gegenüberliegenden Laschen (11, 12), auf denen die Schwenkachse (16, 17) senkrecht steht, bestehen.

3. Lenkeinrichtung nach den Ansprüchen 1 und 2, dadurch gekennzeichnet, daß wenigstens in einer der Laschen (11, 12) ein kreisbogenförmiges quer zur Achrichtung verlaufendes Langloch (18, 19) angeordnet ist, in das ein in das den lenkradseitigen Lenkwellenteil (5) umgebende Gehäuse (13) eingesetzter Sperrbolzen (20, 21) hineinragt.

0075339

4. Lenkradeinrichtung nach Anspruch 3, dadurch gekennzeichnet, daß der Winkel des Langlochs (18, 19) beidseitig der Mittelachse jeweils 3 bis 10° beträgt.

5. Lenkeinrichtung nach den Ansprüchen 1 bis 4, gekennzeichnet durch eine am lenkradseitigen Ende des den lenkgetriebeseitigen Lenkwellenteils (1) umgebenden in diesem Bereich mit einem Längsschlitz (22) versehenen Gehäuses (10) angebrachten Klemmsitzausführung (23) mit geschlitzter Nabe.

6. Lenkeinrichtung nach den Ansprüchen 1 bis 4, dadurch gekennzeichnet, daß der in dem den lenkradseitigen Lenkwellenteil (5) umgebenden Gehäuse (13) eingesetzte Sperrbolzen (20, 21) als Klemmbolzen ausgebildet ist.

7. Lenkeinrichtung nach Anspruch 5, dadurch gekennzeichnet, daß die Nabe der Klemmsitzausführung (23) zwei Klemmschlitze (24, 25) aufweist, wobei in dem einen Klemmschlitz (25) in einer entsprechenden Bohrung (28) eine an dem den lenkradseitigen Lenkwellenteil (5) umgebenden Gehäuse (13) angelenkte Stange (27) geführt ist.

8. Lenkeinrichtung nach Anspruch 7, dadurch gekennzeichnet, daß die Stange (27) mit einer Verzahnung (26) versehen ist, in die ein auf der Klemmschraube (30) lose aufliegender klemmbarer Zahnring (31) eingreift.

Fig.1

2/2

Fig. 2

Fig. 3

Europäisches
Patentamt

**EUROPÄISCHER RECHERCHENBERICHT**

0075339

Nummer der Anmeldung

EP 82 20 1019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-1 287 403 (TRIUMPH) <br> * Ansprüche; Figuren 1-4 * | 1 | B 62 D 1/18 |
| A | FR-A-2 360 454 (CHRYSLER) | | |
| A | US-A-4 257 624 (HANSEN) | | |
| A | DE-A-2 727 270 (TOYOTA) | | |
| A | FR-A-2 408 500 (FIAT) | | |
| D | DE-A-1 949 241 (KLÖCKNER-HUMBOLDT-DEUTZ AG) | | |

| | |
|---|---|
| RECHERCHIERTE SACHGEBIETE (Int. Cl. ³) | |
| B 62 D | |

Der vorliegende Recherchenbericht wurde für alle Patentansprüche erstellt.

| Recherchenort <br> DEN HAAG | Abschlußdatum der Recherche <br> 14-12-1982 | Prüfer <br> PIRIOU J.C. |
|---|---|---|

EPA Form 1503. 03.82